Europäisches Patentamt

(19) European Patent Office

Office européen des brevets

(11) Veröffentlichungsnummer: **0 096 762**
**B1**

(12) # EUROPÄISCHE PATENTSCHRIFT

(45) Veröffentlichungstag der Patentschrift:
03.09.86

(51) Int. Cl.⁴: **B 01 D 53/20**

(21) Anmeldenummer: **83105008.3**

(22) Anmeldetag: **20.05.83**

(54) Sattelfüllkörper für Gas-Flüssigkeitskontakt.

(30) Priorität: **04.06.82 DE 3221130**

(43) Veröffentlichungstag der Anmeldung:
**28.12.83 Patentblatt 83/52**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
DE-A-1 769 581
DE-A-2 521 442

PUBLIKATION VON DESTILLATIONSTECKNIK
STAGE KG, 1964, Köln-Niehl, "Füllkörper- und
Rieselkolonnen" * Seite 2 *

Die Akte enthält technische Angaben, die nach
dem Eingang der Anmeldung eingereicht wurden
und die nicht in dieser Patentschrift enthalten sind.

(73) Patentinhaber: **Paul Rauschert GmbH & Co. KG,
D-8644 Pressig (DE)**

(72) Erfinder: **Billet, Reinhard, Dr./Laerholzstrasse 53/D-4630
Bochum/DE**
Erfinder: **Mackowiak, Jerzy, Dr./Hustadtring 75/D-4630
Bochum 1/DE**
Erfinder: **Kober, Rainer, Porzellanfabrik 1, D-8645
Steinwiesen (DE)**
Erfinder: **Geipel, Werner, Dr., Nordhalbener
Strasse 18, D-8645 Steinwiesen (DE)**

(74) Vertreter: **Weber, Dieter, Dr., Dr. Dieter Weber
und Klaus Seiffert Patentanwälte Gustav-
Freytag- Strasse 25 Postfach 6145, D-6200
Wiesbaden 1 (DE)**

EP 0 096 762 B1

LIBER, STOCKHOLM 1986

## Beschreibung

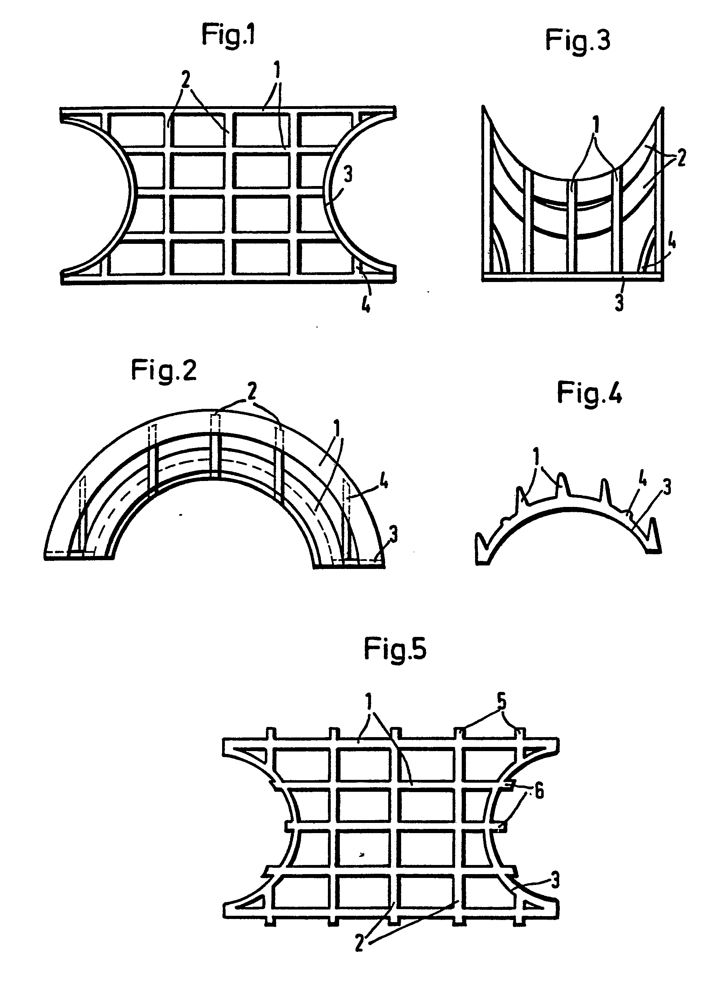

Sattelfüllkörper für Gas-Flüssigkeitskontakt aus einem Kunststoffmaterial sind beispielsweise aus der DE-A-1 769 581 und der DE-A-2 521 442 bekannt. Sie sind als Segment des inneren Umfangsteiles eines hohlen Toroids mit kompakten Wänden ausgebildet und haben von der Achse des Torids nach außen überstehende, gegenüberliegende Seitenflächen, zwischen denen zur Achse des Toroids hin eine konvexe innere Umfangsfläche und von der Achse des Toroids hinweg eine konkave äußere Umfangsfläche liegt. Weiterhin zeigt die Publikation der Destillationstechnik Stage KG mit dem Titel "Füllkörper- und Rieselkolonnen" (1964) in Abb. 2 auf Seite 2 zwei Sattelfüllkörper aus einem Drahtnetz. Solche Füllkörper haben sehr kleine Öffnungen zwischen den Rippen und bestehen aus Metalldraht mit rundem Querschnitt.

Aufbauend auf diesen bekannten Grundformen des Sattelfüllkörpers bestand die der Erfindung zugrundeliegende Aufgabe darin, Sattelfüllkörper zu bekommen, die einen erhöhten Stoffübergang ergeben und eine erhöhte Gasdurchlässigkeit besitzen.

Die erfindungsgemäßen Sattelfüllkörper für Gas-Flüssigkeitskontakt aus mehreren ersten zueinander parallel angeordneten, nach der einen Seite hin bogenförmig gekrümmten Rippen und mehreren zweiten zueinander parallel, zu den ersten Rippen senkrecht angeordneten, nach der gegenüberliegenden Seite hin bogenförmig gekrümmten Rippen sind dadurch gekennzeichnet, daß sie aus einem Kunststoffmaterial bestehen, daß sie zwei die Endbereiche der ersten Rippen miteinander verbindende bogenförmig gekrümmte Verbindungsstege besitzen, daß die Rippen scharfkantig ausgebildet sind und daß die Öffnungen zwischen den Rippen eine Fläche von 0,5 bis 2 cm² besitzen.

Diese netzartige Struktur der Sattelfüllkürper führt zu einer Vermehrung der Abtropfflächen und Abstropfstellen sowie zu einer weitaus höheren Anzahl von Kontaktstellen als bei bekannten Sattelfüllkörpern. Eine Schüttung der erfindungsgemäßen Sattelfüllkörper enthält wesentlich mehr Einzelkörper als eine Schüttung üblicher Sattelfüllkörper. Die Gasdurchlässigkeit ist gegenüber bekannten Sattelfüllkörpern wesentlich erhöht.

Die hieraus resultierenden Vorteile sind ein erhöhter Stoffübergang, erhöhte Gasdurchlässigkeit, herabgesetzter Druckverlust, geringerer Energiebedarf für die zum Durchblasen der Gase benötigten Gebläse und erheblich höherer Durchsatz von Gas und Flüssigkeit.

Die gekrümmten Rippen des erfindungsgemäßen Sattelfüllkörpers können unterschiedlichen Querschnitt, wie mehreckigen, beispielsweise quadratischen oder rechteckigen Querschnitt haben. Besonders zweckmäßig ist es, wenn die bogenförmig gekrümmten Rippen plattenartig ausgebildet sind, d. h. eine größere Höhe in der Richtung der Krümmungsebene als Breite besitzen. Zweckmäßig ist das Verhältnis von Höhe zu Breite der plattenartig ausgebildeten Rippen 1,5 bis 5 : 1.

Solchermaßen plattenartig ausgebildete Rippen ergeben vergrößerte Ablaufflächen, was die Effektivität der erfindungsgemäßen Sattelfüllkörper erhöht.

Zweckmäßig kann man bei den üblichen Sattelfüllkörpergrößen zwischen den beiden gekrümmten Verbindungsstegen drei Rippen und senkrecht hierzu fünf Rippen vorsehen. Die Scharfkantigkeit bekommt man durch Spritzgießverfahren, und diese Scharfkantigkeit ist wichtig für den erhöhten Stoffübergang. Dieser wird weiter verbessert, wenn man den entsprechend den obigen Angaben plattenartigen Rippen einen im wesentlichen dreieckigen Querschnitt gibt, der dem Sattelfüllkörper einerseits gute Stabilität verleiht und andererseits die Rippen in einer relativ scharfen spitzen Kante auslaufen läßt.

Bevorzugt ist es weiterhin, zusätzlich zu der gitterartigen Auflösung der Sattelfüllkörperstruktur eine erhöhte Anzahl von Abtropfpunkten in der Form von Abtropfspitzen vorzusehen. Hierzu ist es zweckmäßig, die senkrecht zu den Verbindungsstegen angeordneten ersten Rippen unter Bildung von Abtropfspitzen über die Verbindungsstege hinausragen zu lassen und/oder die hierzu senkrechten zweiten Rippen unter Bildung von Abtropfspitzen über die beiden äußersten ersten Rippen hinausragen zu lassen. Das so überstehende freie Ende einer jeden Rippe bildet einen Abtropfpunkt, der die Erhöhung des Stoffübergangs der erfindungsgemäßen Füllkörper weiter fördert.

In der Zeichnung zeigt
Fig. 1 eine Draufsicht auf eine erste Ausführungsform eines Sattelfüllkörpers nach der Erfindung,
Fig. 2 eine Seitenansicht des in Fig. 1 dargestellten Sattelfüllkörpers,
Fig. 3 eine Frontalansicht des in den Fig. 1 und 2 dargestellten Sattelfüllkörpers,
Fig. 4 eine Draufsicht auf einen der Verbindungsstege des in den Fig. 1 bis 3 dargestellten Sattelfüllkörpers und
Fig. 5 eine Draufsicht entsprechend Fig. 1 auf eine andere Ausführungsform eines Sattelfüllkörpers nach der Erfindung.

Der in den Fig. 1 bis 4 dargestellte Sattelfüllkörper besitzt eine netzartige Struktur, die aus einer Gruppe zueinander paralleler erster Rippen 1 und einer Gruppe zueinander paralleler, zu den ersten Rippen senkrecht angeordneter zweiter Rippen 2 besteht. Die ersten Rippen 1 sind bei der in den Fig. 1 bis 4 gezeigten Stellung des Sattelfüllkörpers nach unten bogenförmig gekrümmt und damit in der Darstellung der Fig. 1 nach oben über die Papierebene gewölbt.

Wie Fig. 3 zeigt, sind demgegenüber die Rippen 2 in der dargestellten Lage des Füllkörpers nach unten gewölbt. Die Verbindungsstege 3 liegen bei der Darstellung der Fig. 1 in der Papierebene, in der sie bogenförmig gekrümmt sind.

In den Eckbereichen des in den Fig. 1 bis 4 dargestellten Füllkörpers sind zusätzlich noch Versteifungsstege 4 von der jeweils äußersten Rippe 1 zu dem benachbarten Verbindungssteg 3 vorgesehen.

Die Fig. 2 und 3 zeigen, daß sowohl die Rippen 1 als auch die Rippen 2 plattenförmig ausgebildet sind, d.h. eine größere Höhe senkrecht zur Papierebene als Breite in der Papierebene haben. Fig. 4 zeigt weiterhin, daß die Rippen im wesentlichen dreieckförmigen Querschnitt besitzen und so an ihren freien Kanten, die bei der Darstellung in den Fig. 2 und 3 nach unten zeigen, messerartig auslaufen.

Die in Fig. 5 dargestellte Ausführungsform unterscheidet sich von der in den Fig. 1 bis 4 dargestellten Ausführungsform nur dadurch, daß sie zusätzliche Abtropfspitzen 5 und 6 besitzt. Die Abtropfspitzen 5 kommen so zustande, daß die Rippen 2 über die jeweils äußersten Rippen 1 hinausragen, während die Abtropfspitzen 6 dadurch entstanden sind, daß ein Teil der Rippen 1 über die Verbindungsstege 3 hinausragen.

Die Öffnungen in der Netzstruktur zwischen den Rippen 1 und den Rippen 2 liegt in der Größenordnung von etwa 1 cm², was eine günstige Öffnungsgröße ist.

## Patentansprüche

1. Sattelfüllkörper für Gas-Flüssigkeitskontakt aus mehreren ersten zueinander parallel angeordneten, nach der einen Seite hin bogenförmig gekrümmten Rippen (1) und mehreren zweiten zueinander parallel, zu den ersten Rippen (1) senkrecht angeordneten, nach der gegenüberliegenden Seite hin bogenförmig gekrümmten Rippen (2), dadurch gekennzeichnet, daß er aus einem Kunststoffmaterial besteht, daß er zwei die Endbereiche der ersten Rippen (1) miteinander verbindende bogenförmig gekrümmte Verbindungsstege (3) besitzt, daß die Rippen (1, 2) scharfkantig ausgebildet sind und daß die Öffnungen zwischen den Rippen (1, 2) eine Fläche von 0,5 bis 2 cm² besitzen.

2. Sattelfüllkörper nach Anspruch 1, dadurch gekennzeichnet, daß die Rippen (1, 2) plattenartig ausgebildet sind.

3. Sattelfüllkörper nach Anspruch 2, dadurch gekennzeichnet, daß die plattenartig ausgebildeten Rippen (1, 2) ein Verhältnis von Höhe zu Breite von 1,5 bis 5 : 1 besitzen.

4. Sattelfüllkörper nach Anspruch 2 und 3, dadurch gekennzeichnet, daß die plattenartig ausgebildeten Rippen (1, 2) einen im wesentlichen dreieckigen Querschnitt besitzen.

5. Sattelfüllkörper nach Anspruch 1 bis 4, dadurch gekennzeichnet, daß wenigstens ein Teil der ersten Rippen (1) unter Bildung von Abtropfspitzen (6) über die Verbindungsstege (3) hinausragen.

6. Sattelfüllkörper nach Anspruch 1 bis 5, dadurch gekennzeichnet, daß wenigstens ein Teil der zweiten Rippen (2) unter Bildung von Abtropfspitzen (5) über die äußersten ersten Rippen (1) hinausragen.

## Claims

1. Saddle filling member for gas-liquid contact comprising a plurality of first ribs (1) arranged parallel to each other and arcuately curved towards one side, and a plurality of second ribs (2) arranged parallel to each other and normal to the first ribs (1) and arcuately curved towards the opposite side, characterized in that it consists of a plastic material, that it has two arcuately curved connecting webs (3) interconnecting the end regions of the first ribs (1), that the ribs (1, 2) are of a sharp-edged configuration and that the openings between the ribs (1, 2) have an area of 0.5 to 2 cm².

2. Saddle filling member according to claim 1, characterized in that the ribs (1, 2) are of a plate-like configuration.

3. Saddle filling member according to claim 2, characterized in that the ribs (1, 2) of a plate-like configuration have a ratio of height to width of 1.5 to 5 : 1.

4. Saddle filling member according to claim 2 and 3, characterized in that the ribs (1, 2) of a plate-like configuration are of substantially triangular cross-section.

5. Saddle filling member according to claims 1 to 4, characterized in that at least a part of the first ribs (1) project beyond the connecting webs (3), forming drip-off tip-portions (6).

6. Saddle filling member according to claims 1 to 5, characterized in that at least a part of the second ribs (2) project beyond the outermost first ribs (1), forming drip-off tip-portions (5).

## Revendications

1. Elément de garnissage en forme de selle pour contact gaz-liquide, comportant plusieurs premières nervures (1) courbées en forme d'arc vers un côté et disposées parallèlement les unes aux autres, et plusieurs deuxièmes nervures (2) courbées en forme d'arc vers le côté opposé, disposées parallèlement les unes aux autres et perpendiculairement aux premières nervures (1), caractérisé en ce qu'il est constitué en matière plastique, qu'il comporte deux traverses (3) courbées en forme d'arc reliant ensemble les extrémités des premières rainures (1), que les rainures (1, 2) sont en forme d'arêtes vives et que les ouvertures ménagées entre les nervures (1, 2) ont une superficie de 0,5 à 2 cm$^2$.

2. Elément de garnissage selon la revendication 1, caractérisé en ce que les nervures (1, 2) sont en forme de plaque.

3. Elément de garnissage selon la revendication 2, caractérisé en ce que les nervures (1, 2) en forme de plaque présentent un rapport hauteur/largeur de 1,5 à 5 : 1.

4. Elément de garnissage selon les revendications 2 et 3, caractérisé en ce que les nervures (1, 2) en forme de plaque ont essentiellement une section triangulaire.

5. Elément de garnissage selon les revendications 1 à 4, caractérisé en ce que les premières nervures (1) sont, au moins en partie, en saillie au-delà des traverses (3) en formant des pointes d'égouttage (6).

6. Elément de garnissage selon les revendications 1 à 5, caractérisé en ce que les deuxièmes nervures (2) sont, au moins en partie, en saillie au-delà des premières nervures (1) les plus extrêmes, en formant des pointes d'égouttage (5).

# Fig.1

# Fig.3

# Fig.2

# Fig.4

# Fig.5